# EUROPÄISCHE PATENTSCHRIFT

(11) **EP 1 582 751 B1**
(45) Veröffentlichungstag und Bekanntmachung des Hinweises auf die Patenterteilung: **15.08.2007**
(21) Anmeldenummer: 04008040.0
(22) Anmeldetag: 02.04.2004
(51) Int. Cl.: F04D 29/58, F04D 13/06, H02K 11/04

(54) **Pumpenaggregat**
Pump unit
Unité de pompage

(43) Veröffentlichungstag der Anmeldung: 05.10.2005
(73) Patentinhaber: GRUNDFOS A/S, 8850 Bjerringbro (DK)
(72) Erfinder: Hansen, Peter, 9000 Aalborg (DK); Andersen, Jorgen, 8361 Hasselager (DK)
(74) Vertreter: Hemmer, Arnd

(56) Entgegenhaltungen:
- EP-A- 0 854 560
- DE-A- 10 114 923
- DE-A- 10 239 512
- US-A- 5 714 816
- US-A- 6 081 056

## Beschreibung

Die Erfindung betrifft ein Pumpenaggregat, insbesondere eine Heizungsumwälzpumpe, mit den im Oberbegriff des Anspruchs 1 angegebenen Merkmalen.

Derartige elektrisch betriebene Pumpenaggregate weisen üblicherweise Klemmenkästen auf, die die Pumpenaggregate mit einer Stromversorgung verbinden und deren Leistungs- und Steuerungselektronik sowie Bedienelemente beinhalten. Die Klemmenkästen sind zumeist schalenförmig an den äußeren Mantelflächen der Motorgehäuse der Pumpenaggregate angeordnet.

Da sich einige elektronische Bauteile während des Pumpenbetriebs sehr stark erwärmen, weisen die Klemmenkästen Kühlkörper bzw. Wärmetauscher auf, die die Abwärme der elektronischen Bauteile durch die Gehäusewand an die Umgebungsluft abgeben.

Mit immer intelligenter werdenden Kontroll- und Steuerungseinrichtungen der Pumpenaggregate, wie sie beispielsweise in der Heiztechnik eingesetzt werden, nimmt auch der Umfang deren elektronischer Ausstattung stetig zu. Entsprechend vergrößert sich in den Klemmenkästen die Anzahl derjeniger Bauteile der Leistungs- und Steuerungselektronik, die während des Betriebs eine so große Eigenwärme erzeugen, dass diese von Wärmetauschern abgeführt werden muss. Bekannte Pumpenaggregate stoßen hier bezüglich der Abfuhr der von der Elektronik erzeugten Wärme an ihre Grenzen.

Bei der Anordnung wärmeerzeugender elektronischer Bauteile ist eine effiziente Kühlung häufig nicht nur erforderlich, um diese Bauteile selber vor Überhitzung zu schützen sondern auch, um mögliche benachbarte wärmeempfindliche Bauteile zu schützen.

EP-A-0 854 560 beschreibt ein elektrisches Antriebssystem mit einem Elektromotor und einem an einer Stirnseite des Motors angeordneten Gehäuse, in welchem ein Umrichter und die Antriebselektronik des Motors angeordnet sind. An der von dem Motor abgewandten Seite des Gehäuses schließt sich ein Gehäuseteil an, in dem zur Kühlung der elektronischen Bauteile ein von einem separaten Lüftermotor angetriebener Lüfter sowie ein Wärmetauscher angeordnet sind. Die Anordnung eines motorgetriebenen Lüfters erfordert jedoch einen großen konstruktiven und steuerungstechnischen Aufwand und führt zu einer verhältnismäßig großen Bauweite des Motors in Richtung der Statorachse.

Vor diesem Hintergrund liegt der vorliegenden Erfindung die Aufgabe zugrunde, ein kompaktes Pumpenaggregat zu schaffen, bei dem die Abwärme der Leistungs- und Steuerungselektronik in ausreichendem Maße abgeführt werden kann und die Herstellung des Pumpenaggregats in einfacher Weise realisiert werden kann.

Diese Aufgabe wird erfindungsgemäß durch ein Pumpenaggregat mit den im Anspruch 1 angegebenen Merkmalen gelöst. Vorteilhafte Weiterbildungen der Erfindung ergeben sich aus den Unteransprüchen, der nachfolgenden Beschreibung und der Zeichnung.

Das Pumpenaggregat weist ein Statorgehäuse und einen an der Außenseite des Statorgehäuses angebrachten Klemmenkasten auf. Dabei überdeckt zumindest ein erster Bereich des Klemmenkastens eine Stirnseite des Statorgehäuses. In diesem Bereich des Klemmenkastens ist ein Wärmeverteiler zur Kühlung elektronischer Bauelemente angeordnet. Zumindest ein zweiter Bereich des Klemmenkastens ist an einem Umfangsabschnitt des Statorgehäuses angeordnet. Neben Bedienelementen, die in dem Klemmenkasten zweckmäßigerweise so angebracht sind, dass sie an der Außenwand des Klemmenkastens frei zugänglich sind, sind in dem Klemmenkasten beispielsweise die Stromversorgung des Pumpenaggregats sowie Bauteile der Leistungs- und Steuerungselektronik angeordnet. Darunter befinden sich elektronische Bauteile, die strombeaufschlagt eine so große Eigenwärme entwickeln, dass diese aus dem Klemmenkasten abgeführt werden muss.

Der Klemmenkasten ist an dem Statorgehäuse eines elektrischen Antriebsmotors des Pumpenaggregats befestigt. Zumindest ein erster Bereich des Klemmenkastens überdeckt dabei die Stirnseite des Statorgehäuses. Zumindest ein zweiter Bereich des Klemmenkastens ist an einem Umfangsabschnitt des Statorgehäuses angeordnet.

An der Stirnfläche des Statorgehäuses sind bevorzugt elektrische Anschlüsse des Antriebsmotors angeordnet. Daher weist der Klemmenkasten zweckmäßig in dem die Stirnfläche des Statorgehäuses überdeckenden Bereich zu diesen Anschlüssen komplementäre Verbindungselemente auf, die eine direkte elektrische Verbindung des Antriebsmotors mit der Stromversorgung sowie der Leistungs- und Steuerungselektronik herstellen. Die Verbindungselemente sind vorzugsweise an einer Schaltplatine ausgebildet, auf der zumindest Teile der Leistungs- und Steuerungselektronik des Pumpenaggregats angeordnet sind und die in dem Klemmenkasten vorteilhafterweise in einer Ebene parallel zur Stirnfläche des Statorgehäuses angeordnet ist.

Um die Eigenwärme der auf dieser Schaltplatine befindlichen wärmeerzeugenden Bauteile abführen zu können, ist in dem Bereich des Klemmenkastens, welcher die Stirnfläche des Statorgehäuses überdeckt, ein Wärmeverteiler angeordnet, über den die Wärme aus dem Klemmenkasten heraus an die Umgebungsluft abgeleitet wird. Die Anordnung des Wärmeverteilers an der Stirnfläche des Statorgehäuses ermöglicht, eine große Wärmeabgabefläche bereitzustellen, welche von allen Seiten gut zugänglich ist, so dass eine ausreichende Kühlluftzufuhr in jeder Einbaulage der Pumpe gewährleistet ist.

Die Form des Wärmeverteilers ist vorteilhaft der Stirnseite des Statorgehäuses angepasst. So erstreckt sich zumindest eine Grundfläche des Wärmeverteilers über eine Fläche, die hinsichtlich ihrer Abmessungen und Gestalt im Wesentlichen der gesamten Fläche der Stirnseite des Statorgehäuses entspricht. Auf diese Weise kann der Wärmeverteiler so groß ausgebildet werden, dass er die Eigenwärme wärmeerzeugender elektronischer Bauteile in ausreichendem Maße ableiten kann. Die Größe des Wärmeverteilers ermöglicht die Verwendung von nicht metallischen Werkstoffen, z. B. Kunststoff gegebenenfalls mit die Wärmeleitfähigkeit verbessernden Zusätzen.

Zweckmäßigerweise ist der Wärmeverteiler vollständig im Inneren des Klemmenkastens angeordnet. Die Gehäusewandung des Klemmenkastens überdeckt den Bereich der Stirnfläche des Statorgehäuses so, dass der dort angeordnete Wärmeverteiler völlig von dem Klemmenkasten umgeben ist. Benutzer des Pumpenaggregats werden so vor eventuellen Kontakten mit dem heißen Wärmeverteiler geschützt.

Um die von dem Wärmeverteiler aufgenommene Wärme besonders effektiv an die Umgebungsluft weiterleiten zu können, d. h. große Wärmeströme an die Umgebung abgeben zu können, ist es von Vorteil, wenn in einer Außenwandung des Klemmenkastens in der Nähe des Wärmeverteilers Lüftungsöffnungen ausgebildet sind. Dabei sind die Lüftungsöffnungen zweckmäßigerweise so groß gestaltet, dass durch sie ein möglichst großer Wärmestrom aus dem Inneren des Klemmenkastens abgeführt werden kann, andererseits aber ein versehentlicher Kontakt einer Person mit dem in dem Klemmenkasten befindlichen Wärmeverteiler verhindert wird.

In einer bevorzugten Ausführungsform sind die Lüftungsöffnungen in einer den Wärmeverteiler umfänglich umgebenden Außenwandung des Klemmenkastens, vorzugsweise über den gesamten Umfang verteilt, ausgebildet, während eine den Wärmeverteiler an seiner dem Statorgehäuse abgewandten Seite überdeckende Außenwandung des Klemmenkastens geschlossen ausgebildet ist. Beispielsweise können die Lüftungsöffnungen schlitzförmig ausgebildet sein oder es können Durchbrechungen so angeordnet sein, dass sie eine gitternetzartige Struktur bilden. Müssen sehr große Wärmeströme abgeleitet werden, kann auch zumindest ein Teilbereich der Außenwandung des Klemmenkastens, die den Wärmeverteiler an seiner dem Statorgehäuse abgewanden Seite überdeckt, Lüftungsöffnungen aufweisen. Die Verteilung der Lüftungsöffnungen über den gesamten Umfang hat den Vorteil, dass Kühlluft von allen Seiten durch den Bereich des Klemmenkastens, in dem der Wärmeverteiler angeordnet ist, strömen kann. So wird in jeder Einbaulage der Pumpe eine ausreichende Luftzirkulation zur Kühlung des Wärmeverteilers ermöglicht.

Erfindungsgemäß weist der Klemmenkasten einen zweiten Bereich auf, der an einem Umfangsabschnitt des Statorgehäuses angeordnet ist. Dieser Bereich des Klemmenkastens wird vorzugsweise durch eine von der Umfangsfläche des Statorgehäuses beabstandeten Mantelfläche sowie zwei in radialer Richtung des Statorgehäuses verlaufende Stirnflächen am pumpenseitigen und am wärmetauscherseitigen Ende der Mantelfläche nach außen begrenzt und bietet einen weiteren Bauraum für elektronische Komponenten. Bevorzugt ist der zweite Bereich des Klemmenkastens zumindest teilweise einstückig mit dem ersten Bereich des Klemmenkastens, beispielsweise als Kunststoff-Spritzgusseil ausgebildet. Im zweiten Bereich des Klemmenkastens befindliche eigenwärmeerzeugende Bauteile können ggf. über einen zusätzlichen Wärmetauscher, der an einer Innenwandung des Klemmenkastens in diesem Bereich, bevorzugt an dessen Mantelfläche, angeordnet sein kann, gekühlt werden. Die Anordnung eines Teils des Klemmenkastens im Umfangsbereich des Statorgehäuses ermöglicht, die Baulänge des Pumpenaggregats klein zu halten.

Zweckmäßigerweise sind an einer der Stirnfläche des Statorgehäuses abgewandten Stirnfläche des zweiten Bereichs des Klemmenkastens Bedien- und/oder Anzeigeelemente angeordnet. Die Bedien- und Anzeigeelemente befinden sich somit an der wärmetauscherseitigen Stirnfläche des zweiten Bereichs des Klemmenkastens, d.h. an der der Pumpe mit den Rohranschlüssen abgewandten freien Stirnfläche, so dass sie für eine vor dem Pumpenaggregat stehende Person sehr gut zugänglich sind.

Die Stirnfläche, an welcher die Bedien- und/oder Anzeigeelemente angeordnet sind, ist bevorzugt gegenüber der Außenwandung des Klemmenkastens, welche den Wärmeverteiler an seiner dem Statorgehäuse abgewandten Seite überdeckt, in Richtung des Statorgehäuses zurückversetzt. Hierdurch ist sichergestellt, dass die den Wärmetauscher umfänglich umgebende Außenwandung des Klemmenkastens und damit die an dieser Außenwandung angeordneten Lüftungsöffnungen vollständig frei liegen und so der Wärmeaustausch des Wärmeverteilers mit der Umgebungsluft in alle radialen Richtungen nicht behindert wird.

Der Wärmeverteiler weist vorteilhaft eine Vielzahl von Kühlrippen und/oder Kühlstiften auf, welche sich an der der Stirnseite des Statorgehäuses abgewandten Seite des Wärmeverteilers vorzugsweise normal zur Stirnseite des Statorgehäuses erstrecken. Je nach Anzahl und geometrischer Ausbildung dieser Kühlrippen bzw. Kühlstifte kann die Wärmeaustauschfläche des Wärmeverteilers gegenüber der eines eben ausgebildeten Wärmeverteilers erheblich vergrößert werden, so dass entsprechend größere Wärmeströme von dem Wärmeverteiler an die Umgebungsluft abgegeben werden können.

Da die Leistungsfähigkeit des Wärmeverteilers neben der Größe der Wärmeaustauschflächen auch von der Anströmung durch den Wärmetauschpartner, d. h. in diesem Fall der Umgebungsluft abhängig ist, sind die Kühlrippen und/oder die Kühlstifte vorzugsweise derart angeordnet, dass zwischen Ihnen in jeder Durchmesserrichtung des Wärmeverteilers Strömungswege für Kühlluft ausgebildet sind. So können die Kühlrippen und Kühlstifte beispielsweise auf einer Grundfläche des Wärmeverteilers so angeordnet sein, dass sie Aneinanderreihungen bilden, die vom Mittelpunkt der Grundfläche ausgehend sternförmig nach außen verlaufen. So kann Umgebungsluft den Wärmeverteiler in allen Richtungen radial zur Statorachse durchströmen. Besonders bevorzugt ist es, Kühlstifte so auf der Grundfläche des Wärmeverteilers anzuordnen, dass sie voneinander beabstandet, vorzugsweise gleichmäßig über die Grundfläche des Wärmeverteilers verteilt sind. Auf diese Weise ist jeder Kühlstift vollständig von ausreichend großen Strömungswegen umgeben, so dass er aus allen Richtungen radial zur Statorachse angeströmt werden kann und seine Wärmebeladung an die Umgebungsluft abgeben kann.

Vorteilhaft ist zwischen dem Umfangsbereich des Wärmeverteilers und einer angrenzenden Wandung des Klemmenkastens ein Dichtelement angeordnet. Auf diese Weise wird der statorseitig hinter dem Wärmeverteiler liegende Bereich des Klemmenkastens, der die Elektronik des Pumpenaggregats beinhaltet gegenüber dem Bereich des Klemmenkastens, der durch den Wärmeverteiler und den Gehäusebereich des Klemmenkastens, der den Wärmeverteiler überdeckt, gebildet wird, dicht verschlossen. Dies ist besonders wegen der in letztgenanntem Bereich des Klemmenkastens vorgesehenen Lüftungsöffnungen zweckmäßig, durch die Feuchtigkeit in das Innere des Klemmenkastens eindringen kann. Das Dichtungselement verhindert ein Eindringen der Feuchtigkeit in den Bereich des Klemmenkastens, in dem die Leistungs-und Steuerungselektronik angeordnet ist. Auf diese Weise wird die elektrische bzw. elektronische Ausstattung des Klemmenkastens vor der Feuchtigkeit geschützt.

Bevorzugt besteht der Wärmeverteiler aus Kunststoff und ist vorteilhaft als Spritzgussteil ausgebildet. Auf diese Weise kann der Wärmeverteiler einfach und kostengünstig hergestellt werden. Wegen des geringen Gewichts des Kunststoffes ist der Wärmeverteiler unkompliziert in dem Klemmenkasten montierbar. Zur Verbesserung der Wärmeleitfähigkeit, können dem Kunststoff beispielsweise mineralische Zusätze beigemengt werden.

Die Erfindung ist nachfolgend anhand eines in den Zeichnungen dargestellten Ausführungsbeispiels erläutert. Es zeigen:
- Fig. 1: eine Explosionszeichnung eines Statorgehäuses eines Pumpen-aggregats mit einem daran angeordneten Klemmenkasten und
- Fig. 2: eine Explosionszeichnung des in Fig. 1 dargestellten Statorgehäuses eines Pumpenaggregats mit dem daran angeordneten Klemmenkasten aus einem anderen Betrachtungswinkel.

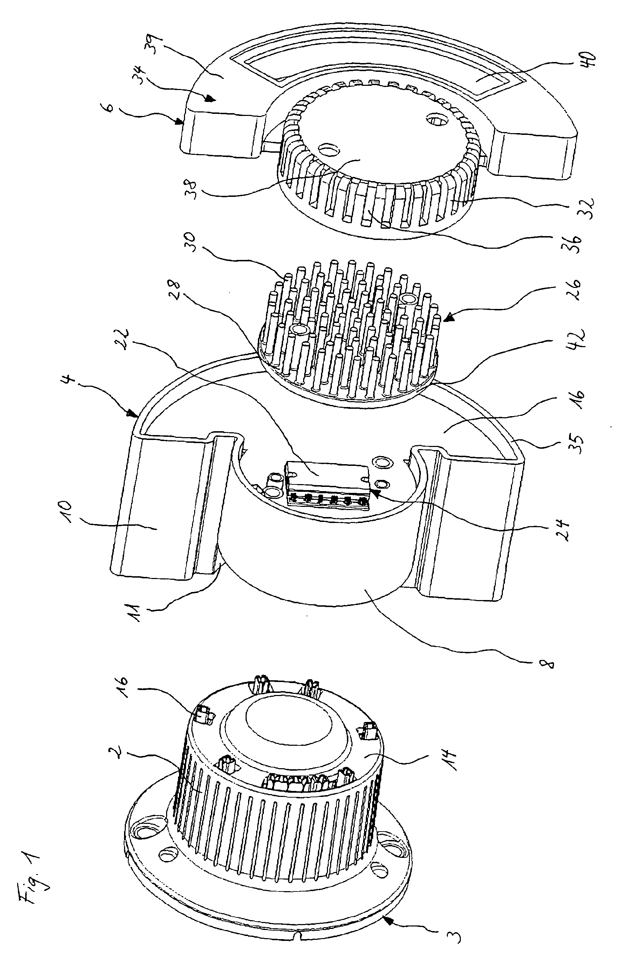

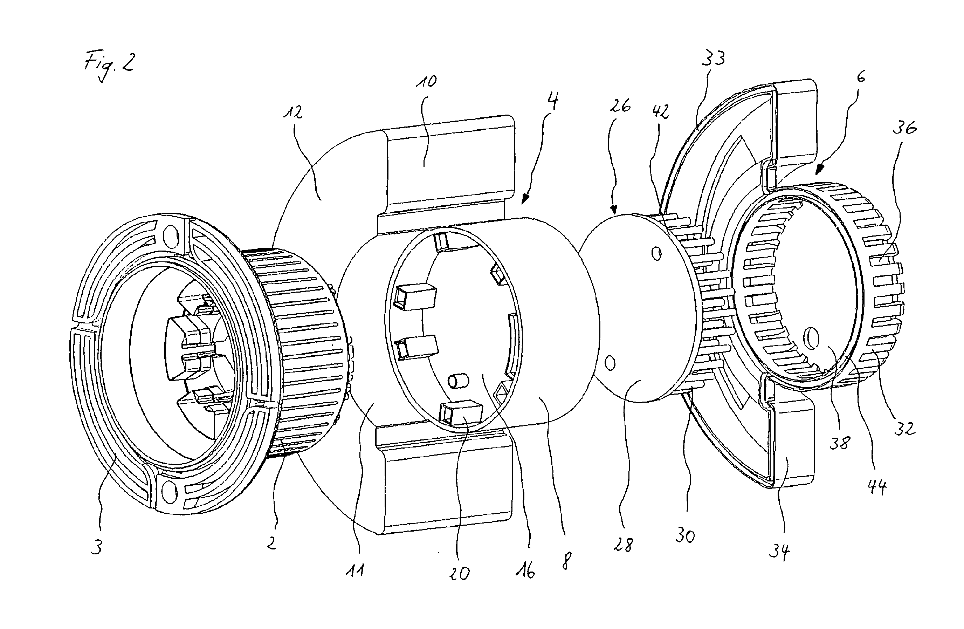

Die Fig. 1 und 2 zeigen ein Statorgehäuse 2 eines Antriebsmotors eines Pumpenaggregats sowie einen an diesem Statorgehäuse 2 angeordneten Klemmenkasten bestehend aus einem ersten Klemmenkastenteil 4 und einem zweiten Klemmenkastenteil 6. Das Statorgehäuse 2 wird mit einer Fläche 3 an eine in den Zeichnungen nicht dargestellte Pumpe angeflanscht

Das erste Klemmenkastenteil 4 ist ein einstückiges Kunststoff-Spritzgussteil und besteht aus einem hohlen kreiszylindrischen Bereich 8 und einem an dessen Außenwand umfänglich angebundenen Bereich 10, der die Form eines hohlen Zylinderringsegments aufweist und dessen pumpenseitiger Stirnflächenbereich 12 durch eine Außenwandung verschlossen ist. Dabei sind die beiden Bereiche 8 und 10 des ersten Klemmenkastenteils 4 so aneinander angebunden, dass sie gemeinsam eine von der Pumpe abgewandte offene Stirnfläche des ersten Klemmenkastenteils 4 ausbilden. Diese weist die Form zweier annähernd halbkreisförmiger Kreisabschnitte mit unterschiedlichen Durchmessern auf, die an ihren Schnittkanten aneinander angebunden sind, wobei die Kreisabschnitte zueinander konzentrisch sind. Die Länge des zylinderringförmigen Bereichs 10 in Richtung der Statorlängsachse ist größer als die Länge des kreiszylindrischen Bereichs 8 des Klemmenkastens 4, so dass der Bereich 10 gegenüber dem Bereich 8 in Richtung Pumpe einen Vorsprung 11 ausbildet.

Das erste Klemmenkastenteil 4 ist so an dem Statorgehäuse 2 befestigt, dass die dem Statorgehäuse 2 zugewandte Außenwand des Vorsprungs 11 des Bereichs 10 an der Umfangsfläche des Statorgehäuses 2 anliegt und die Außenwandung des Bereichs 8 einen Teilbereich der Umfangsfläche und eine Stirnfläche 14 des Statorgehäuses 2 überdeckt, d.h. das Statorgehäuse 2 greift in den kreiszylindrischen bzw. topfförmigen Bereich 8 des Klemmenkastens 4 ein. Dazu korrespondiert der Innendurchmesser des Bereichs 8 mit dem Außendurchmesser des Statorgehäuses 2.

Von der von der Stirnfläche 14 des Statorgehäuse 2 abgewandten offenen Stirnfläche des ersten Klemmenkastenteils 4 her ist eine Platine 16 in einer zur Stirnfläche 14 beabstandeten parallelen Ebene in das Klemmenkastenteil 4 eingepasst, wobei die Platine 16 eine zur Stirnfläche bzw. zum Innenquerschnitt des Klemmenkastenteils 4 komplementäre Außenkontur aufweist. Auf der Platine 16 ist zumindest ein Teil einer Leistungs- und Steuerungselektronik des Pumpenaggregats angebracht, insbesondere an der dem Statorgehäuse 2 zugewandten Seite der Platine 16.

An der Stirnfläche 14 des Statorgehäuses 2 sind elektrische Steckkontakte 18 angeordnet. Diese Steckkontakte 18 sind in der Nähe der Umfangsfläche des Statorgehäuses 2 um den Umfang der Stirnfläche 14 verteilt. Die Platine 16 weist an Ihrer dem Statorgehäuse 2 zugewandten Seite Anschlussbuchsen 20 auf, deren Ausrichtung den Positionen der Steckkontakte 18 an der Stirnfläche 14 des Statorgehäuses 2 entspricht, so dass die Steckkontakte 18 des Statorgehäuses 2 im zusammengebauten Zustand in die Anschlussbuchsen 20 der Platine 16 eingreifen. Die in die Anschlussbuchsen 20 der Platine 16 eingreifenden Steckkontakte 18 stellen eine elektrische Verbindung zwischen dem Antriebsmotor des Pumpenaggregats und einer Stromversorgung sowie der Leistungs- und Steuerungselektronik her, die auf der Platine 16 angeordnet sind.

An ihrer dem Statorgehäuse 2 abgewandten Seite ist an der Platine 16 innerhalb des kreiszylindrischen Bereichs 8 des ersten Klemmenkastenteils 4 eine ebene Kontaktfläche 22 eines Eigenwärme erzeugenden Bauteils 24 angeordnet. Auf dieser Kontaktfläche 22 liegt im zusammengebauten Zustand des Klemmenkastens ein Wärmeverteiler 26 mit einer ebenen Grundplatte 28 auf.

Die Grundplatte 28 des Wärmeverteilers 26 ist kreisförmig ausgebildet und besitzt einen Durchmesser, der dem Innendurchmesser des kreiszylindrischen Bereichs 8 des ersten Klemmenkastenteils 4 angepasst ist. An der von der Platine 16 abgewandten Seite der Grundfläche 28 des Wärmeverteilers 26 sind eine Vielzahl von Kühlstiften 30 angeordnet, welche sich gleichmäßig über die Grundplatte 28 verteilt jeweils in eine Richtung normal zu dieser, d.h. parallel zur Statorlängsachse, erstrecken.

Umhüllt wird der Wärmeverteiler 26 durch das zweite Klemmenkastenteil 6. Das zweite Klemmenkastenteil 6 bildet die Abdeckung des ersten Klemmenkastenteils 4. Dementsprechend weist das zweite Klemmenkastenteil 6 umfangsseitig die gleiche Außenkontur wie das erste Klemmenkastenteil 4 auf. So besitzt das zweite Klemmenkastenteil 6 einen kreiszylindrischen Grundkörper 32, der mit dem kreiszylindrischen Bereich 8 des ersten Klemmenkastenteils 4 korrespondiert sowie ein außenseitig an dessen Grundkörper 32 angeordnetes Zylinderringsegment 34, dessen Außenkontur der Außenkontur des Bereichs 10 des ersten Klemmenkastenteils 4 angepasst ist.

Das Zylinderringsegment 34 ist so an dem Grundkörper 32 angeordnet bzw. einstückig mit diesem ausgebildet, dass der Grundkörper 32 und das Zylinderringsegment 34 statorseitig eine gemeinsame offene Stirnfläche des zweiten Klemmenkastenteils 6 ausbilden. Die Umfangskante 33 dieser offenen Stirnfläche liegt im geschlossenen Zustand des Klemmenkastens an der Umfangskante 35 des ersten Klemmenkastenteils 4 im Bereich der Platine 16 an, wobei der Kontaktbereich zwischen erstem und zweiten Klemmenkastenteil durch ein nicht dargestelltes Dichtelement bzw. Dichtmittel abgedichtet wird.

Die Längsausdehnung des Zylinderringsegments 34 des zweiten Klemmenkastenteils 6 ist geringer als die des zylindrischen Grundkörpers 32 des zweiten Klemmenkastenteils 6. Auf diese Weise ragt der Grundkörper 32 gegenüber dem Zylinderringsegment 34 in einer Richtung weg vom Statorgehäuse 2 prominent hervor, so dass der Grundkörper 32 umfänglich eine vollständige Umfangswandung aufweist.

Der Grundkörper 32 des zweiten Klemmenkastenteils 6 weist an seinem vom Statorgehäuse 2 abgewandten Ende eine geschlossene Stirnfläche 38 auf, wohingegen an seiner kreiszylindrischen Umfangsfläche, welche gegenüber dem Zylinderringsegment 34 in Richtung der Statorlängsachse vorsteht, über den gesamten Umfang verteilt Lüftungsschlitze 36 angeordnet sind. Diese Lüftungsschlitze 36 ermöglichen, dass die Kühlstifte 30 des Wärmeverteilers 26 aus allen radialen Richtungen von Umgebungsluft angeströmt bzw. umströmt werden können.

Das Zylinderringsegment 34 des ersten Klemmenkastenteils 4 weist eine dem Statorgehäuse 2 abgewandte geschlossene Stirnfläche 39 auf, die durch eine Ausnehmung 40 durchbrochen ist. Im Bereich dieser Ausnehmung 40 werden in den Fig. 1 und 2 nicht dargestellte Bedien- und Anzeigeelemente des Klemmenkastens angeordnet und mit der auf der Platine 16 angebrachten Elektronik verbunden.

Um die in dem Klemmenkasten befindliche Elektronik des Pumpenaggregats vor Feuchtigkeit, Staub und anderen Fremdkörpern zu schützen, ist der kreiszylindrische Grundkörper 32 des zweiten Klemmenkastenteils 6 gegenüber dem Wärmeverteiler 26 abgedichtet. Die Abdichtung erfolgt über ein in den Fig. 1 und 2 nicht dargestelltes Dichtelement, bevorzugt durch einen Dichtring, der zwischen einer Umfangskante 42 der Grundplatte 28 des Wärmeverteilers 26 und einer Umfangskante 44 im Bereich der dem Statorgehäuse 2 zugewandten Stirnfläche des zylindrischen Grundkörpers 32 des zweiten Klemmenkastenteils 6 angeordnet ist. Die kreis- bzw. ringförmige Dicht- bzw. Anlagefläche zwischen Wärmeverteiler 26 und zweitem Klemmenkastenteil 6 ermöglicht dabei eine zuverlässige Abdichtung dieser Verbindungslinie. Hierdurch entsteht in dem Grundkörper 32 ein gegenüber dem übrigen Klemmenkasten feuchtigkeitsdicht abgeschlossener Raum, so dass durch die Lüftungsschlitze 36 eindringende Feuchtigkeit nicht die im Inneren des Klemmenkastens, insbesondere an der dem Statorgehäuse 2 zugewandten Seite des Wärmeverteilers 26, angeordnete Elektronik benetzen und damit eventuell zerstören kann.

Die oben beschriebene Gestaltung des Klemmenkastens, dessen in großen Teilen zylindrisches Gehäuse eine axiale Verlängerung des Statorgehäuses 2 ausbildet, bietet einen einfachen elektrischen Anschluss des Stators, Raum für einen großen Wärmeverteiler 26, der die im Betrieb anfallende Wärmeentwicklung innerhalb des Klemmenkastens in ausreichendem Maße ableiten kann, und nicht zuletzt eine ansprechende Form des gesamten Pumpenaggregats.

### Bezugszeichenliste

- 2: Statorgehäuse
- 3: Fläche
- 4: erstes Klemmenkastenteil
- 6: zweites Klemmenkastenteil
- 8: Bereich
- 10: Bereich
- 11: Vorsprung
- 12: Stirnfläche
- 14: Stirnfläche
- 16: Platine
- 18: Steckkontakt
- 20: Anschlussbuchse
- 22: Kontaktfläche
- 24: Bauteil
- 26: Wärmeverteiler
- 28: Grundplatte
- 30: Kühlstift
- 32: Grundkörper
- 33: Umfangskante
- 34: Zylinderringsegment
- 35: Umfangskante
- 36: Lüftungsschlitze
- 38: Stirnfläche
- 39: Stirnfläche
- 40: Ausnehmung
- 42: Umfangskante
- 44: Umfangskante

## Patentansprüche

1. Pumpenaggregat mit einem Statorgehäuse (2) und einem an der Außenseite des Statorgehäuses (2) angebrachten Klemmenkasten, **dadurch gekennzeichnet, dass** zumindest ein erster Bereich (8, 32) des Klemmenkastens eine Stirnseite (14) des Statorgehäuses (2) überdeckt und in diesem Bereich (8, 32) des Klemmenkastens ein Wärmeverteiler (26) zur Kühlung elektronischer Bauelemente (24) angeordnet ist und ein zweiter Bereich (10) des Klemmenkastens an einem Umfangsabschnitt des Statorgehäuses (2) angeordnet ist.

2. Pumpenaggregat nach Anspruch 1, **dadurch gekennzeichnet, dass** die Form des Wärmeverteilers (26) der Stirnseite (14) des Statorgehäuses (2) angepasst ist.

3. Pumpenaggregat nach Anspruch 1 oder 2, **dadurch gekennzeichnet, dass** der Wärmeverteiler (26) vollständig im Inneren des Klemmenkastens angeordnet ist.

4. Pumpenaggregat nach einem der vorangehenden Ansprüche, **dadurch gekennzeichnet, dass** in einer Außenwandung des Klemmenkastens in der Nähe des Wärmeverteilers (26) Lüftungsöffnungen (36) ausgebildet sind.

5. Pumpenaggregat nach einem der vorangehenden Ansprüche, **dadurch gekennzeichnet, dass** eine den Wärmeverteiler (26) an seiner dem Statorgehäuse (2) abgewandten Seite überdeckende Außenwandung (38) des Klemmenkastens geschlossen ausgebildet ist und dass Lüftungsöffnungen (36) in einer den Wärmeverteiler (26) umfänglich umgebenden Außenwandung des Klemmenkastens, vorzugsweise über den gesamten Umfang verteilt, ausgebildet sind.

6. Pumpenaggregat nach einem der vorangehenden Ansprüche, **dadurch gekennzeichnet, dass** an einer der Stirnseite (14) des Statorgehäuses (2) abgewandten Stirnfläche (39) des zweiten Bereiches (34) des Klemmenkastens Bedien- und/oder Anzeigeelemente angeordnet sind.

7. Pumpenaggregat nach Anspruch 6, **dadurch gekennzeichnet, dass** die Stirnfläche (39), an welcher die Bedien- und/oder Anzeigeelemente angeordnet sind, gegenüber der Außenwandung (38) des Klemmenkastens, welche den Wärmeverteiler an seiner dem Statorgehäuse (2) abgewandten Seite überdeckt, in Richtung des Statorgehäuses (2) zurückversetzt ist.

8. Pumpenaggregat nach einem der vorangehenden Ansprüche, **dadurch gekennzeichnet, dass** der Wärmeverteiler (26) eine Vielzahl von Kühlrippen und/oder Kühlstiften (30) aufweist, welche sich an der der Stirnseite (14) des Statorgehäuses (2) abgewandten Seite des Wärmeverteilers (26) vorzugsweise normal zur Stirnseite (14) des Statorgehäuses (2) erstrecken.

9. Pumpenaggregat nach Anspruch 8, **dadurch gekennzeichnet, dass** die Kühlrippen und/oder Kühlstifte (30) derart angeordnet sind, dass zwischen ihnen in jeder Durchmesserrichtung des Wärmeverteilers Strömungswege für Kühlluft ausgebildet sind.

10. Pumpenaggregat nach einem der vorangehenden Ansprüche, **dadurch gekennzeichnet, dass** zwischen dem Umfangsbereich des Wärmeverteilers (26) und einer angrenzenden Wandung des Klemmenkastens ein Dichtelement angeordnet ist.

11. Pumpenaggregat nach einem der vorangehenden Ansprüche, **dadurch gekennzeichnet, dass** der Wärmeverteiler (26) aus Kunststoff besteht.

## Claims

1. A pump unit with a stator housing (2) and with a terminal box attached to the outer side of the stator housing (2), **characterised in that** at least a first region (8, 32) of the terminal box covers an end-side (14) of the stator housing (2), and a heat distributor (26) for cooling electronic components (24) is arranged in this region (8, 32) of the terminal box, and a second region (10) of the terminal box is arranged on a peripheral section of the stator housing (2).

2. A pump unit according to claim 1, **characterised in that** the shape of the heat distributor (26) is adapted to the end-side (14) of the stator housing (2).

3. A pump unit according to claim 1 or 2, **characterised in that** the heat distributor (26) is arranged completely in the inside of the terminal box.

4. A pump unit according to one of the preceding claims, **characterised in that** ventilation openings (36) are formed in an outer wall of the terminal box in the vicinity of the heat distributor (26).

5. A pump unit according to one of the preceding claims, **characterised in that** an outer wall (38) of the terminal box, which covers the heat distributor (26) at the side of heat distributor which is distant to the stator housing (2), is designed in a closed manner, and that ventilation openings (36) are formed in an outer wall of the terminal box which peripherally surrounds the heat distributor (26), preferably distributed over the whole periphery.

6. A pump unit according to one of the preceding claims, **characterised in that** operating- and/or display elements are arranged on an end-face (39) of the second region (34) of the terminal box, said end-face being distant to the end-side (14) of the stator housing (2).

7. A pump unit according to claim 6, **characterised in that** the end-face (39) on which the operating- and/or display elements are arranged, is set back in the direction of the stator hsouing (2), with respect to the outer wall (38) of the terminal box, which covers the heat distributor at its side distant to the stator housing (2).

8. A pump unit according to one of the preceding claims, **characterised in that** the heat distributor (26) comprises a multitude of cooling ribs and/or cooling pins (30) which extend at the side of the heat distributor (26) which is distant to the end-side (14) of the stator housing (2), preferably normally to the end-side (14) of the stator housing (2).

9. A pump unit according to claim 8, **characterised in that** the cooling ribs and/or cooling pins (30) are arranged in a manner such that flow paths for cooling air are formed between them in every diameter direction of the heat distributor.

10. A pump unit according to one of the preceding claims, **characterised in that** a sealing element is arranged between the peripheral region of the heat distributor (26) and an adjacent wall of the terminal box.

11. A pump unit according to one of the preceding claims, **characterised in that** the heat distributor (26) consists of plastic.

## Revendications

1. Unité de pompage comprenant un boîtier de stator (2) et une boîte à bornes disposée sur la face extérieure du boîtier de stator (2), **caractérisée en ce qu'**au moins une première région (8, 32) de la boîte à bornes recouvre une face frontale (14) du boîtier de stator (2) et que, dans cette région (8, 32) de la boîte à bornes, est disposé un dissipateur de chaleur (26) pour le refroidissement de composants électroniques (24), et **en ce qu'**une deuxième région (10) de la boîte à bornes est disposée sur une section périphérique du boîtier de stator (2).

2. Unité de pompage selon la revendication 1, **caractérisée en ce que** la forme du dissipateur de chaleur (26) est adaptée à la face frontale (14) du boîtier de stator (2).

3. Unité de pompage selon la revendication 1 ou 2, **caractérisée en ce que** le dissipateur de chaleur (26) est entièrement disposé à l'intérieur de la boîte à bornes.

4. Unité de pompage selon l'une des revendications précédentes, **caractérisée en ce que**, dans une paroi extérieure de la boîte à bornes à proximité du dissipateur de chaleur (26), sont réalisées des ouvertures de ventilation (36).

5. Unité de pompage selon l'une des revendications précédentes, **caractérisée en ce qu'**une paroi extérieure (38) de la boîte à bornes recouvrant le dissipateur de chaleur (26) sur son côté opposé au boîtier du stator (2) est fermée et **en ce que** des ouvertures de ventilation (36) sont réalisées dans une paroi extérieure de la boîte à bornes entourant le dissipateur de chaleur (26) sur sa périphérie, de préférence réparties sur toute la circonférence.

6. Unité de pompage selon l'une des revendications précédentes, **caractérisée en ce que**, sur une surface frontale (39) de la deuxième région (34) de la boîte à bornes, opposée à la face frontale (14) du boîtier de stator (2), sont disposés des éléments de commande et/ou d'affichage.

7. Unité de pompage selon la revendication 6, **caractérisée en ce que** la surface frontale (39), sur laquelle sont disposés les éléments de commande et/ou d'affichage, est décalée vers l'arrière en direction du boîtier du stator (2) par rapport à la paroi extérieure (38) de la boîte à bornes qui recouvre le dissipateur de chaleur sur son côté opposé au boîtier du stator (2).

8. Unité de pompage selon l'une des revendications précédentes, **caractérisée en ce que** le dissipateur de chaleur (26) présente une pluralité d'ailettes de refroidissement et/ou pointes de refroidissement (30) qui s'étendent sur le côté du dissipateur de chaleur (26) opposé à la face frontale **(14)** du boîtier de stator (2), de préférence perpendiculairement à la face frontale (14) du boîtier de stator (2).

9. Unité de pompage selon la revendication 8, **caractérisée en ce que** les ailettes de refroidissement et/ou pointes de refroidissement (30) sont disposées de telle façon qu'entre elles, dans chaque direction du diamètre du dissipateur de chaleur, sont réalisés des chemins d'écoulement de l'air de refroidissement.

10. Unité de pompage selon l'une des revendications précédentes, **caractérisée en ce qu'**entre la région périphérique du dissipateur de chaleur (26) et une paroi contiguë de la boîte à bornes, est disposé un élément d'étanchéité.

11. Unité de pompage selon l'une des revendications précédentes, **caractérisée en ce que** le dissipateur de chaleur (26) est en matière plastique.
